# EUROPÄISCHE PATENTANMELDUNG

(11) **EP 0 829 710 A2**
(43) Veröffentlichungstag der Anmeldung: **18.03.1998**
(21) Anmeldenummer: 97115947.0
(22) Anmeldetag: 12.09.1997
(51) Int. Cl.: G01L 9/00

(54) **Drucksensor unter Verwendung von mit akustischen Oberflächenwellen arbeitenden Elementen - OFW-Elemente**

(30) Priorität: 13.09.1996 DE 19637392
(71) Anmelder: SIEMENS AKTIENGESELLSCHAFT, 80333 München (DE)
(72) Erfinder: Scherr, Holger, 81737 München (DE); Scholl, Gerd, 80636 München (DE)

(57) **Zusammenfassung**

Drucksensor mit einer auf einer druckaufnehmenden Membran (2) ausgebildeten reflektiven OFW-Verzögerungsleitung (2 - 6) mit mindestens drei Reflektoren (4, 5, 6), die sich sowohl über einen sich dehnenden als auch einen sich stauchenden Bereich der druckaufnehmenden Membran (2) erstreckt.

## Beschreibung

Die vorliegende Erfindung betrifft einen Drucksensor unter Verwendung von mit akustischen Oberflächenwellen arbeitenden Elementen - OFW-Elemente - nach dem Oberbegriff des Patentanspruchs 1.

Drucksensoren der gattungsgemäßen Art sind beispielsweise aus 1994 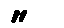 IEEE International Frequency Control Symposium", Seiten 395 bis 400 bekannt. Bei einem derartigen bekannten OFW-Drucksensor sind auf einem als druckaufnehmende Membran ausgebildeten piezoelektrischen Substrat zwei OFW-Resonatoren vorgesehen, von denen einer in der Mitte und der andere außerhalb der Mitte der druckaufnehmenden Membran angeordnet ist. Die beiden Resonatoren sind in die Rückkoppelschleife von zwei Oszillatoren geschaltet und dienen als Frequenzregelelemente. Die bei Einwirken von Druck auf die Membran entstehende Deformation bewirkt Änderungen in den Mittenfrequenzen der Resonatoren. Da sich die Resonanzräume der Resonatoren an Stellen entgegengesetzter Vorzeichen der Deformation befinden, haben ihre Frequenzverschiebungen ebenfalls unterschiedliches Vorzeichen. Die Differenzfrequenz ist die Summe der Resonator-Frequenzverschiebungen. Der gemessene Druck ist eine Funktion dieser Differenzfrequenz und darüber hinaus der Temperatur. Zur Kompensation von Temperaturänderungen ist zusätzlich zu den OFW-Resonatoren ein Thermowiderstand vorgesehen.

Derartige Drucksensoren benötigen eine aktive elektronische Beschaltung der OFW-Resonatoren zur Realisierung von Oszillatoren. Weiterhin sind derartige Drucksensoren nicht ohne weiteres fernabfragbar, so daß ihre Einsatzmöglichkeiten beschränkt sind. Beispielsweise sind derartige Drucksensoren - wenn überhaupt - nur schwierig an leitungsgebunden schwer oder überhaupt nicht zugänglichen Stellen verwendbar.

Der vorliegenden Erfindung liegt die Aufgabe zugrunde, einen passiv - d. h. ohne aktive elektronische Beschaltung - ausgebildeten Drucksensor der in Rede stehenden Art anzugeben, der auch über Funk fernabfragbar ist.

Diese Aufgabe wird bei einem Drucksensor der eingangs genannten Art erfindungsgemäß durch die Maßnahmen nach dem kennzeichnenden Teil des Patentanspruchs 1 gelöst.

Weiterbildungen der Erfindung sind Gegenstand von Unteransprüchen.

Die Erfindung wird nachfolgend anhand von in den Figuren der Zeichnung dargestellten Ausführungsbeispielen näher erläutert. Es zeigt:
- Figur 1: eine schematische Darstellung einer Ausführungsform eines erfindungsgemäßen Drucksensors; und
- Figur 2: eine spezielle Ausgestaltung einer in einem Drucksensor nach Figur 1 verwendbaren OFW-Verzögerungsleitung.

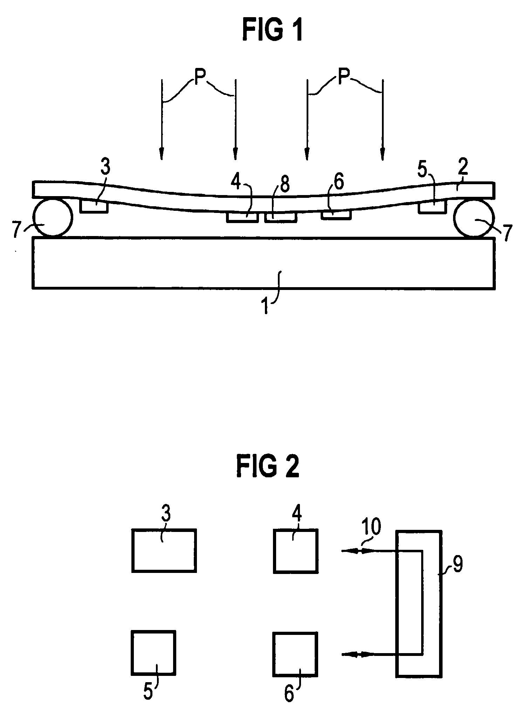

Gemäß Figur 1 ist auf einer beispielsweise aus Quarz bestehenden Trägerplatte 1 über einen Rahmen 7, der beispielsweise durch Glaslot oder Kunststoff gebildet werden kann, eine reflektive OFW-Verzögerungsleitung 2 - 6 angeordnet, von der ein piezoelektrisches Substrat 2 gleichzeitig als druckaufnehmende Membran des Drucksensors dient. Ein auf die durckaufnehmende Membran 2 einwirkender Druck ist schematisch durch Pfeile P angedeutet.

Es sei hier zunächst kurz angemerkt, daß eine reflektive OFW-Verzögerungsleitung im Prinzip aus einem Eingangs-/Ausgangs-Interdigitalwandler sowie mindestens einem Reflektor besteht. Der Eingangs-/Ausgangs-Interdigitalwandler wandelt ein elektrisches Signal in eine akustische Oberflächenwelle um, die in den Reflektor läuft und von diesem auf den Eingangs-/Ausgangs-Interdigitalwandler rückreflektiert wird. Diese rückreflektierte akustische Oberflächenwelle wird durch den Eingangs-/Ausgangs-Interdigitalwandler in ein elektromagnetisches Signal rücküberführt. Die Laufzeit der akustischen Oberflächenwelle zwischen Eingangs-/Ausgangs-Interdigitalwandler und Reflektor entspricht der Verzögerungszeit der reflektiven OFW-Verzögerungsleitung.

Erfindungsgemäß wird beim Drucksensor nach Figur 1 die reflektive OFW-Verzögerungsleitung durch das gleichzeitig als druckaufnehmende Membran wirkende piezoelektrische Substrat 2, einen Eingangs-/Ausgangs-Interdigitalwandler 3 sowie mindestens drei Reflektoren 4, 5, 6 gebildet. Weiterhin ist erfindungsgemäß einer der Reflektoren - in Figur 1 der Reflektor 4 - in einem sich dehnenden Bereich und ein weiterer Reflektor - in Figur 1 der Reflektor 5 - in einem sich stauchenden Bereich der druckaufnehmenden Membran 2 angeordnet. Ein weiterer Reflektor 6 unterteilt die Laufstrecke der reflektiven OFW-Verzögerungsleitung in sich dehnende und stauchende Abschnitte. Dieser Reflektor 6 ist vorzugsweise in einem neutralen Übergangsbereich zwischen sich dehnenden und sich stauchendem Bereich der druckaufnehmenden Membran 2 angeordnet. Bei der Auswertung des Drucks werden die Laufzeiten bzw. die Phasen der sich dehnenden von denen der sich stauchenden Abschnitte gewichtet subtrahiert. Dabei eliminieren sich gleichzeitig Temperatureffekte und es werden darüber hinaus Linearitätsfehler verringert. Die vom Druck herrührenden Phasenunterschiede addieren sich dem Betrag nach, so daß sich die Sensitivität auf Druck erhöht.

Ein erfindungsgemäß ausgebildeter OFW-Drucksensor ist als passive Anordnung ohne zusätzliche aktive elektronische Beschaltung in einfacher Weise auch über Funk fernabfragbar, in dem in nicht näher dargestellter Weise über eine Antenne ein Abfragesignal in den Eingangs-/Ausgangs-Interdigitalwandler 3 eingespeist und das verzögerte Signal vom Eingangs-/Ausgangs-Interdigitalwandler 3 über die Antenne abgestrahlt werden kann. Da reflektive OFW-Verzögerungsleitungen grundsätzlich breitbandig sind, ist auch eine Signalübertragung über Funk in stark gestörten Umgebungen möglich.

Der Reflektor 4 markiert den Anfang, so daß die Sensorantwort unabhängig vom Abstand zu einem (nicht dargestellten) Abfragegerät wird.

Um eventuell auftretende Phasenmehrdeutigkeiten des Sensorsignals zu vermeiden, kann in weiterer Ausgestaltung der Erfindung ein zusätzlicher Reflektor vorgesehen werden, der so nahe an einem der bereits erläuterten Reflektoren angeordnet ist, daß zwischen ihm und diesem benachbarten Reflektor bei maximal auf den Drucksensor wirkenden zu detektierenden Druck eine Phasenverschiebung von höchstens 360° auftritt. Dies ermöglicht eine phaseneindeutige Auswertung der Signalanteile von den Reflektoren, die in einem sich dehnendem und einem sich stauchenden Bereich der druckaufnehmenden Membran angeordnet sind.

Bei dem in Figur 1 dargestellten Ausführungsbeispiel ist ein Reflektor 8 der vorstehend erläuterten Art benachbart zum Reflektor 4 angeordnet.

In Abweichung von der vorstehend beschriebenen Anordnung kann der Reflektor auch etwa in der Mitte zwischen den Reflektoren 4 und 6 angeordnet werden, womit ebenfalls Phasenmehrdeutigkeiten eliminiert werden können.

Beim Ausführungsbeispiel nach Figur 1 wird davon ausgegangen, daß sich die Komponenten der reflektiven OFW-Verzögerungsleitung, d. h. der Eingangs-/Ausgangs-Interdigitalwandler 3 sowie die Reflektoren 4, 5, 6 und 8 in einer einzigen akustischen Spur angeordnet sind. Um eine Verkleinerung der druckaufnehmenden Membran 2 zu erreichen, können in Weiterbildung der Erfindung die Komponenten einer reflektiven OFW-Verzögerungsleitung auch in voneinander verschiedenen, beispielsweise akustisch in Reihe geschalteten akustischen Spuren angeordnet werden. Eine derartige Ausführungsform ist in Figur 2 dargestellt, in der gleiche Elemente wie in Figur 1 mit gleichen Bezugszeichen versehen sind. Wie der schematischen Darstellung nach Figur 2 zu entnehmen ist, sind Reflektoren 4, 5 und 6 in zwei akustischen Spuren angeordnet, die über einen an sich bekannten Umlenker 9 akustisch miteinander gekoppelt sind. Der Verlauf der akustischen Wellenanteile ist in Figur 2 schematisch durch eine mit Pfeilen versehene Linie 10 angedeutet. Bei einer derartigen Anordnung bleibt trotz einer möglichen Verringerung der Fläche der druckaufnehmenden Membran die Laufzeit und damit auch der Sensoreffekt gleich.

## Patentansprüche

1. Drucksensor unter Verwendung von mit akustischen Oberflächenwellen arbeitenden Elementen - OFW-Elemente - als druckempfindliche Elemente, bei dem OFW-Elemente derart auf einer druckaufnehmenden Membran angeordnet sind, daß sie sich an Stellen unterschiedlicher Deformation befinden,
**dadurch gekennzeichnet,**
daß auf der druckaufnehmenden Membran (2) eine reflektive OFW-Verzögerungsleitung (2 - 6, 8) mit mindestens drei Reflektoren (4, 5, 6) derart ausgebildet ist, daß sie sich sowohl über einen sich dehnenden als auch einen sich stauchenden Bereich der druckaufnehmenden Membran (2) erstreckt.

2. Drucksensor nach Anspruch 1,
**dadurch gekennzeichnet,**
daß als druckaufnehmende Membran (2) ein piezoelektrisches Substrat der OFW-Verzögerungsleitung (2 - 6, 8) dient.

3. Drucksensor nach Anspruch 1 und/oder 2,
**dadurch gekennzeichnet,**
daß die OFW-Verzögerungsleitung drei Reflektoren (4, 5, 6) aufweist, von denen ein erster Reflektor (4) in einem sich dehnenden Bereich der druckaufnehmenden Membran (2) sowie ein zweiter Reflektor (5) in einem sich stauchenden Bereich der druckaufnehmenden Membran (2) und ein dritter Reflektor (6) zwischen erstem und zweiten Reflektor (4, 5) angeordnet ist.

4. Drucksensor nach Anspruch 3,
**dadurch gekennzeichnet,**
daß der dritte Reflektor (6) in einem neutralen Übergangsbereich zwischen sich dehnendem und sich stauchende Bereich der druckaufnehmenden Membran (2) angeordnet ist.

5. Drucksensor nach einem der Ansprüche 1 bis 4,
**gekennzeichnet durch**
einen vierten Reflektor (8), der so nahe am ersten, zweiten oder dritten Reflektor (4, 5, 6) angeordnet ist, daß bei maximalem Druck zwischen den an diesen Reflektoren (beispielsweise 4, 8) reflektierten akustischen Oberflächenwellen eine Phasenverschiebung von höchstens 360° auftritt.

6. Drucksensor nach einem der Ansprüche 1 bis 4,
**dadurch gekennzeichnet,**
daß ein vierter Reflektor (8) etwa in der Mitte zwischen zwei Reflektoren (4, 6) des ersten, zweiten und dritten Reflektors (4, 5, 6) angeordnet ist.

7. Drucksensor nach einem der Ansprüche 1 bis 6,
**dadurch gekennzeichnet,**
daß die Reflektoren (4, 5, 6, 8) der reflektiven Verzögerungsleitung (2 - 6, 8) in einer einzigen akustischen Spur auf der druckaufnehmenden Membran (2) angeordnet sind.

8. Drucksensor nach einem der Ansprüche 1 bis 6,
**dadurch gekennzeichnet,**
daß die Reflektoren (4, 5, 6) der reflektiven Verzögerungsleitung in mindestens zwei über einen Umlenker (9) gekoppelten akustischen Spuren angeordnet sind.

9. Drucksensor nach einem der Ansprüche 1 bis 8,
**gekennzeichnet durch**
eine Ausbildung als über Funk fernabfragbarer Sensor, bei dem ein Eingangs-/Ausgangs-Interdigitalwandler (3) der reflektiven Verzögerungsleitung (2 - 6, 8) an eine ein Abfragesignal aufnehmende und ein Antwortsignal abstrahlende Antenne angekoppelt ist.
